# EUROPÄISCHE PATENTSCHRIFT

(11) **EP 0 714 838 B1**
(45) Veröffentlichungstag und Bekanntmachung des Hinweises auf die Patenterteilung: **12.01.2000**
(21) Anmeldenummer: 95118748.3
(22) Anmeldetag: 29.11.1995
(51) Int. Cl.: B65G 65/48

(54) **Vorrichtung zur Entnahme von Schüttgütern aus Silos**
Apparatus for carrying off bulk materials from silos
Dispositif pour l'extraction de matières en vrac depuis des silos

(30) Priorität: 29.11.1994 DE 4442334
(43) Veröffentlichungstag der Anmeldung: 05.06.1996
(73) Patentinhaber: MAGEBA Handels- und Dientstleistungs-GmbH, D-98553 Erlau (DE)
(72) Erfinder: Baisch, Georg, D-72818 Trochtelfingen (DE)
(74) Vertreter: Möbus, Rudolf, Dipl.-Ing.

(56) Entgegenhaltungen:
- EP-A- 0 540 433
- WO-A-87/01363
- DE-B- 1 104 434
- FR-A- 1 576 280

## Beschreibung

Die Erfindung betrifft eine Vorrichtung zur Entnahme von Schüttgütern aus Silos mit einem unterhalb des Silos anordenbaren Gehäuse.

Die Entnahme von Schüttgütern aus Silos, welche auf einem Untergestell oder ähnlichem errichtet sind, geschieht in der Regel durch einen zentralen Bodenauslaß. Dabei fließt in erster Linie das Material aus der Mitte des Silos durch den Auslaß. Das Material aus der Nähe der Silowand bleibt dagegen länger liegen, wird weniger bewegt und mehr verdichtet. Bei bestimmten Schüttgütern wie Baumaterialien kann dies zur Klumpenbildung führen und deren direkte Verwendung nach der Entnahme aus dem Silo erschweren. Werden diese Materialien beispielsweise anschließend mit Wasser vermischt, können sich beim Mischgut unzulässige Inhomogenitäten ergeben. Bei schneller Materialentnahme und insbesondere bei Fasermaterial müssen bei der Verarbeitung des Schüttgutes lästige Entmischungen in Kauf genommen werden.

In der FR-C-1 576 280 ist eine Vorrichtung zum Austragen von stückförmigem oder zähflüssigem Material mit einem drehbaren Boden, der mit gebogenen Führungsteilen versehen ist, die das Material tangential zu einem Auswurfspalt zwischen Boden und Behälterwand leiten und damit eine sehr gleichmäßige Ausschüttung des Materials über den Umfang des Bodens verteilt erreichen. Durch das tangentiale Hinleiten des Materials zur Behälterwand kann mit dieser Vorrichtung auch bei sehr hohen Drehzahlen kein Aufbrechen von eventuell im Material vorhandenen Klumpen erreicht werden.

Der vorliegenden Erfindung liegt die Aufgabe zugrunde, bei Entnahme von Schüttgütern eine mögliche Klumpenbildung rückgängig zu machen oder zumindest zu reduzieren, damit eine direkte Verwertung des Schüttgutes nach der Entnahme aus dem Silo leicht möglich ist.

Diese Aufgabe wird mit einer Vorrichtung zur Entnahme von Schüttgütern aus Silos mit einem unterhalb des Silos anordenbaren Gehäuse dadurch gelöst, daß in diesem Gehäuse eine Drehvorrichtung mit einer rotierbaren Scheibe angeordnet ist, die das Schüttgut an die Gehäusewand schleudert, wobei auf die Scheibe radiale Raumteiler aufgesetzt werden, welche mit der Scheibe für das Schüttgut nach außen offene Kammern bilden. Etwaige Klumpen werden dadurch wieder aufgebrochen. Das Schüttgut wird aufgelockert und sofort verwertbar. Durch die radialen Raumteiler wird die Schleuderwirkung auf das Schüttgut günstig beeinflußt.

Weitere Vorteile ergeben sich dadurch, daß unterhalb der Scheibe weitere mitrotierende Kammern anordenbar sein können, welche bei Bedarf durch Öffnungen in der Scheibe befüllbar sind. Damit kann bei Bedarf ein erhöhter Durchfluß des Schüttgutes bei unverminderter Auflockerung erzielt werden.

Der Gehäuseboden kann zur Entnahme des Schüttgutes mindestens eine Öffnung aufweisen, so daß eine direkt darunter stehende Auffangvorrichtung das aufgelockerte Schüttgut aufnehmen kann. Diese Auffangvorrichtung kann beispielsweise Teil einer Maschine sein - etwa einer Baumaschine zur Herstellung von Estrich, Putzen oder dergleichen, die das Schüttgut sofort weiterverarbeiten kann.

Große Vorteile werden dadurch erzielt, daß die Drehvorrichtung eine in das Silo hineinragende, axiale Verlängerung aufweisen kann. Die axiale Verlängerung kann mit der Scheibe mitrotieren und dazu benutzt werden, eine Rührwirkung im Schüttgut zu erzielen. Vorteilhafterweise können dazu auf die axiale Verlängerung der Drehvorrichtung seitlich abstehende Arme aufgesetzt werden. Die abstehenden Arme fungieren wie Rührarme und sorgen für eine gute Durchmischung und Auflockerung des Schüttgutes.

Dabei erweist es sich als sehr vorteilhaft, daß die seitlichen Arme flach ausgebildet und auf der Verlängerung der Drehvorrichtung azimutal schräg angeordnet sein können. Beim Rotieren mit der Scheibe übertragen die schräg angeordneten Arme auf das Schüttgut eine Bewegungskomponente nach oben, welches dadurch in der Mitte des Silos nach oben transportiert wird. Dadurch wird im Schüttgut des Silos während der Drehung der Rührarme eine Art Konvektionsstrom erzeugt. Oben angekommen rollt das Schüttgut von der höchsten Stelle weiter nach außen hin bis zum Rand des Silos, von wo es nunmehr dem Rand entlang hinunter zum Bodenauslaß transportiert wird. Dadurch wird bereits eine gute Durchmischung und Auflockerung des Schüttgutes erreicht, bevor es in die Schleuderkammer Einlaß findet. Außerdem wird ein gleichmäßiger Durchfluß des Schüttgutes aus allen Silobereichen erzielt. Auch parallel zum Rand des Silos können Arme angeordnet sein.

Die erfindungsgemäße Vorrichtung eignet sich zum einfachen Nachrüsten vorhandener Silos und ist unabhängig von der Art der Maschinen oder Einrichtungen zur Weiterverarbeitung des Schüttgutes.

Nachfolgend wird ein bevorzugtes Ausführungsbeispiel anhand der Zeichnung näher erlaütert.

Es zeigen:
- Fig. 1: eine Schnittansicht einer unterhalb eines Silos angeordneten Vorrichtung zur Entnahme des Schüttgutes;
- Fig. 2: eine Ansicht einer rotierbaren Scheibe der Vorrichtung nach Fig. 1 von oben;
- Fig. 3a, 3b: zwei Ansichten einer axialen Verlängerung der rotierbaren Scheibe mit aufgesetzten Rührarmen;
- Fig. 4: einen Teilschnitt durch den unteren Bereich eines Silos mit einer weiteren Ausgestaltung einer Drehvorrichtung.

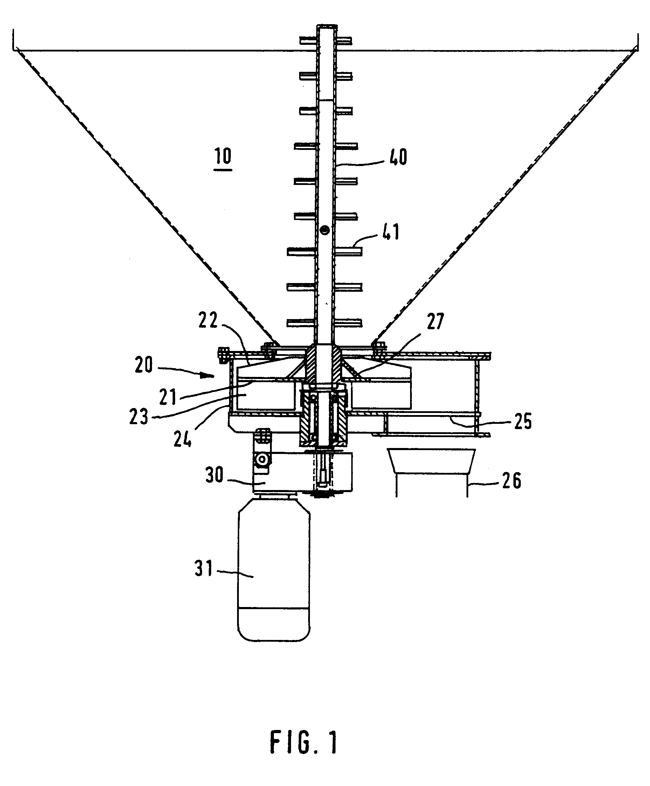

Fig. 1 zeigt eine Schnittansicht eines unterhalb eines Silos 10 angeordneten Gehäuses 20 zur Entnahme von im Silo enthaltenem Schüttgut. Darin ist eine rotierbare Scheibe 21 angeordnet, auf welche Raumteiler 22 von oben und 23 von unten angesetzt sind. Die Raumteiler 22 und 23 bilden mit der Scheibe nach außen offene Kammern für das Schuttgut, durch welche es an die Außenwand 24 des Gehäuses 20 geschleudert wird, bevor es durch eine Öffnung 25 am Boden des Gehäuses 20 in eine Auffangvorrichtung 26 zur weiteren Verarbeitung herausgelassen wird.

In den offenen, oberen Kammern auf der Scheibe 21 sind um die Mitte der Scheibe 21 schräge, nach außen abfallende Platten 27 angesetzt, welche dafür sorgen, daß in den mittleren Bereichen auf der Scheibe das Schüttgut trotz der geringen Zentrifugalbeschleunigung nicht liegen bleibt. Die Fig. 1 zeigt weiter eine axiale Verlängerung 40 der rotierbaren Scheibe 21, welche in das Silo hineinragt und seitlich abstehende Arme 41, 43 aufweist. Das Antriebssystem für die Drehvorrichtung mit einem Getriebe 30 und einem Motor 31 ist am unteren Teil der Fig. 1 angedeutet.

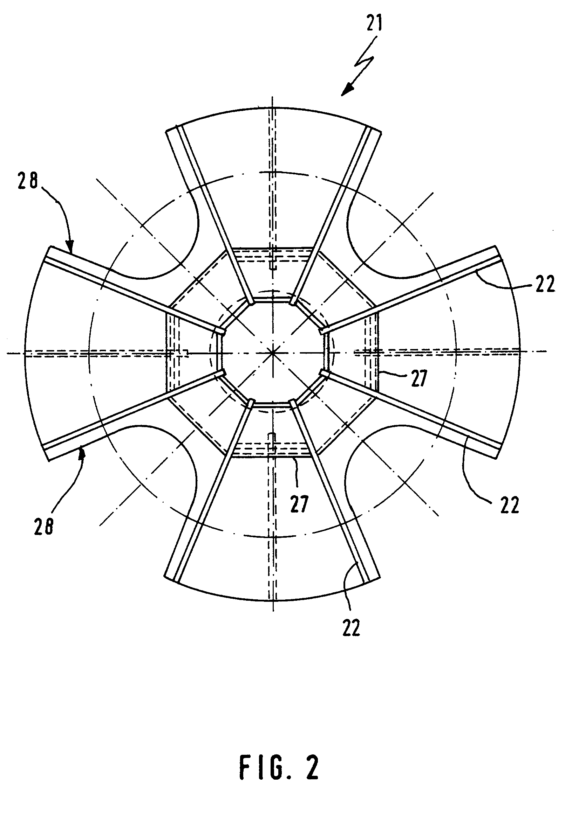

Fig. 2 zeigt eine Ansicht der rotierbaren Scheibe 21 von oben. Die von oben aufgesetzten radialen Raumteiler 22 und die dazwischen schräg angebrachten Platten 27 sorgen für das Schleudern des Schüttgutes an die Gehäusewand 24 oberhalb der Scheibe 21. Verschließbare Öffnungen 28, etwa der gezeichneten Form in der Scheibe 21, lassen sich bei Bedarf öffnen und die unterhalb der Scheibe 21 befindlichen Kammern mit Schüttgut befüllen, welches beim Rotieren der Scheibe 21 ebenfalls an die Gehäusewand 24 geschleudert wird. Die Zahl der Öffnungen 28 und die Höhe der Kammern können je nach Materialbedarf gewählt werden.

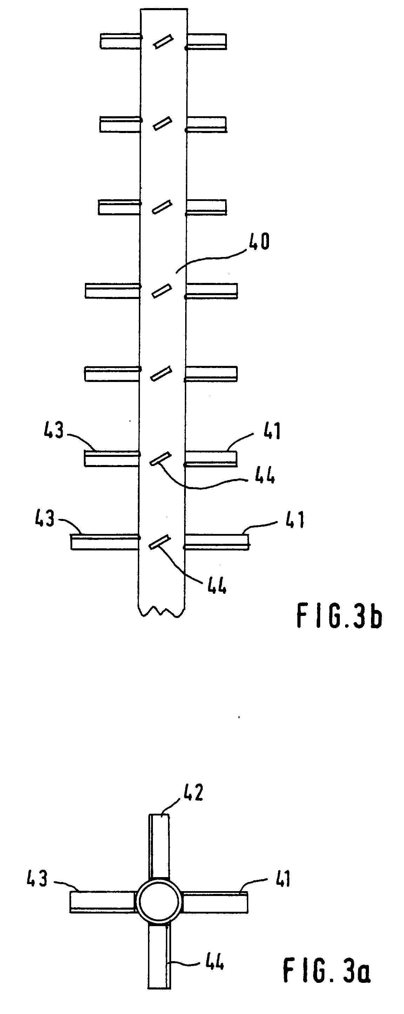

Fig. 3a zeigt eine Ansicht von oben und Fig. 3b eine Frontansicht der axialen Verlängerung 40 der Drehvorrichtung mit den seitlich abstehenden Rührarmen 41, 42, 43, 44. Diese Arme sind flach ausgebildet und auf der Verlängerung 40 der Drehvorrichtung azimutal schräg angeordnet, was in der Frontansicht der Fig. 3b durch die gezeichnete Lage der Rührarme 44 klar hervorgehoben wird. Ebenfalls ist zu erkennen, daß die Länge der Rührarme auf verschiedenen Ebenen unterschiedlich gewählt werden kann.

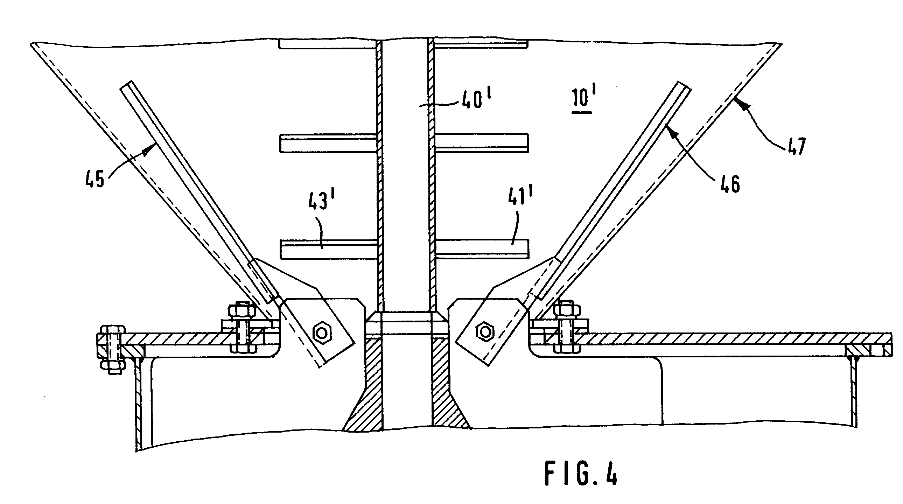

Fig. 4 zeigt eine zweite Ausgestaltung einer axialen Verlängerung 40' der Drehvorrichtung. Neben seitlich abstehenden Armen 41'und 43' sind zwei zusätzliche, schräggestellte Arme 45 und 46 vorgesehen, die sich nahezu parallel zur Wand 47 des Silos 10' erstrecken. Sie dienen dazu, an der Silowand festhängendes Material zu lösen. Die Arme 45, 46 sind dabei verschwenkbar gelagert und können sich so selbst in die gewünschte Position ziehen, da sie leicht abgeflacht sind.

## Patentansprüche

1. Vorrichtung zur Entnahme von Schüttgütern aus Silos mit einem unterhalb des Silos anordenbaren Gehäuse, wobei in diesem Gehäuse (20) eine Drehvorrichtung mit einer rotierbaren Scheibe (21) angeordnet ist, die das Schüttgut an die Gehäusewand (24) schleudert, wobei auf die Scheibe (21) Raumteiler (22, 23) aufgesetzt sind, welche mit der Scheibe (21) für das Schüttgut nach außen offene Kammern bilden, dadurch gekennzeichnet, daß die Raumteiler radial angeordnet sind.

2. Vorrichtung nach Anspruch 2, dadurch gekennzeichnet, daß unterhalb der Scheibe (21) weitere mitrotierende Kammern anordenbar sind, welche bei Bedarf durch Öffnungen (28) in der Scheibe (21) befüllbar sind.

3. Vorrichtung nach einem der Ansprüche 1 bis 3, dadurch gekennzeichnet, daß der Gehäuseboden zur Entnahme des Schüttgutes mindestens eine Öffnung (25) aufweist.

4. Vorrichtung nach einem der Ansprüche 1 bis 4, dadurch gekennzeichnet, daß die Drehvorrichtung eine in das Silo (10) hineinragende, axiale Verlängerung (40) aufweist.

5. Vorrichtung nach Anspruch 5, dadurch gekennzeichnet, daß auf die axiale Verlängerung der Drehvorrichtung seitlieh abstehende Arme (41, 42, 43, 44) aufgesetzt sind.

6. Vorrichtung nach Anspruch 6, dadurch gekennzeichnet, daß die Arme (41, 42, 42, 44) flach ausgebildet und auf der Verlängerung (40) der Drehvorrichtung azimutal schräg angeordnet sind.

7. Vorrichtung nach einem der Ansprüche 5 bis 7, dadurch gekennzeichnet, daß im unteren Bereich der axialen Verlängerung (40') der Drehvorrichtung zwei sich mindestens annähernd parallel zur sich konisch nach unten verjüngenden Silowand (47) ausgerichtete Arme (45, 46) angeordnet sind.

8. Vorrichtung nach Anspruch 8, dadurch gekennzeichnet, daß die Arme verschwenkbar an der axialen Verlängerung angeordnet sind.

## Claims

1. Apparatus for the removal of bulk materials from silos, having an enclosure which is adapted to be disposed beneath the silo, there being arranged in this enclosure (20) a turning mechanism with a rotatable disk (21) which throws the bulk material against the enclosure wall (24), there being positioned on the disk (21) space dividers (22, 23) which with the disk (21) form outwardly open compartments for the bulk material, characterised in that the space dividers are radially disposed.

2. Apparatus according to claim 1, characterised in that beneath the disk (21) can be disposed additional companion rotating compartments which can be filled through openings (28) in the disk (21) as required.

3. Apparatus according to either of claims 1 and 2, characterised in that the floor of the enclosure incorporates at least one opening (25) for the removal of the bulk material.

4. Apparatus according to any of claims 1 to 3, characterised in that the turning mechanism has an axial extension (40) which projects into the silo (10).

5. Apparatus according to claim 4, characterised in that set on the axial extension of the turning mechanism are laterally proud arms (41, 42, 43, 44).

6. Apparatus according to claim 5, characterised in that the arms (41, 42, 43, 44) are flat in construction and are inclined azimuthally on the extension (40) of the turning mechanism.

7. Apparatus according to either of claims 5 and 6, characterised in that arranged in the lower region of the axial extension (40') of the turning mechanism are two arms (45, 46) which are orientated at least approximately parallel to the conically downwardly tapering silo wall (47).

8. Apparatus according to claim 7, characterised in that the arms are arranged on the axial extension in a manner allowing them to swivel.

## Revendications

1. Dispositif pour l'extraction de matières en vrac depuis des silos, avec un carter pouvant être disposé au-dessous du silo, un dispositif tournant disposé dans ce carter (20) avec un disque rotatif (21) qui projette la matière en vrac contre la paroi de carter (24), des séparateurs (22, 23) montés sur le disque (21) qui, avec le disque (21), forment des chambres ouvertes vers l'extérieur pour la matière en vrac, caractérisé en ce que les séparateurs sont disposés radialement.

2. Dispositif selon la revendication 2, caractérisé en ce qu'au-dessous du disque (21) peuvent être disposées d'autres chambres entraînées en rotation qui, en cas de besoin, peuvent être remplies par des ouvertures (28) dans le disque (21).

3. Dispositif selon l'une des revendications 1 à 3, caractérisé en ce que le fond du carter comporte au moins une ouverture (25) pour l'extraction de la matière en vrac.

4. Dispositif selon l'une des revendications 1 à 4, caractérisé en ce que le dispositif tournant comporte un prolongement axial (40) pénétrant dans le silo (10).

5. Dispositif selon la revendication 5, caractérisé en ce que des bras en saillie latérale (41, 42, 43, 44) sont montés sur le prolongement axial du dispositif tournant.

6. Dispositif selon la revendication 6, caractérisé en ce que les bras (41, 42, 43, 44) sont de forme plate et sont disposés avec une inclinaison azimutale sur le prolongement (40) du dispositif tournant.

7. Dispositif selon l'une des revendications 5 à 7, caractérisé en ce que dans la zone inférieure du prolongement axial (40') du dispositif tournant sont disposés deux bras (45, 46) orientés au moins sensiblement parallèlement à la paroi de silo (47) qui se rétrécit vers le bas de façon conique.

8. Dispositif selon la revendication 7, caractérisé en ce que les bras sont montés pivotants sur le prolongement axial.
